(19) Europäisches Patentamt
European Patent Office
Office européen des brevets

(11) EP 2 343 714 A1

(12) # EUROPEAN PATENT APPLICATION
published in accordance with Art. 153(4) EPC

(43) Date of publication:
**13.07.2011 Bulletin 2011/28**

(21) Application number: **08877163.9**

(22) Date of filing: **03.10.2008**

(51) Int Cl.:
***H01B 1/06*** *(2006.01)* ***H01M 8/02*** *(2006.01)*

(86) International application number:
**PCT/JP2008/068033**

(87) International publication number:
**WO 2010/038306 (08.04.2010 Gazette 2010/14)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nippon Kayaku Kabushiki Kaisha**
**Tokyo 102-8172 (JP)**

(72) Inventors:
- **HAMADA, Masahiro**
**Tokyo 115-8588 (JP)**
- **SHIRAI, Kazuteru**
**Tokyo 115-8588 (JP)**

(74) Representative: **Gille Hrabal Struck Neidlein Prop Roos**
**Patentanwälte**
**Brucknerstrasse 20**
**40593 Düsseldorf (DE)**

(54) **POLYETHERSULFONE POLYMER ELECTROLYTE, SOLID POLYMER ELECTROLYTE MEMBRANE, FUEL CELL, AND METHOD FOR PRODUCTION OF THE POLYETHERSULFONE POLYMER ELECTROLYTE**

(57) Disclosed are: a polyethersulfone polymer electrolyte which has excellent durability (particularly swelling resistance) while keeping its high ion conductivity, and which can be produced at a low cost; an electrolyte membrane; and a method for producing the polyethersulfone polymer electrolyte. The polyethersulfone polymer electrolyte has both of a constituent unit represented by the formula (I) and a constituent unit represented by the formula (II).

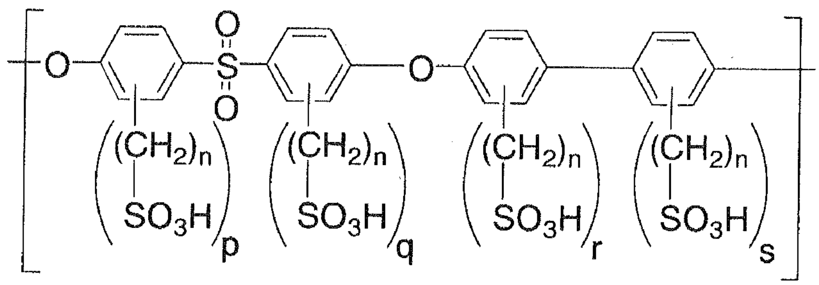

(I)

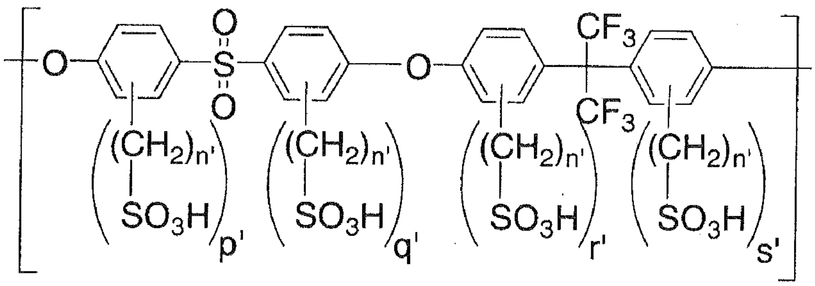

(II)

EP 2 343 714 A1

wherein n and n' independently represent an integer of 1 to 6; and p, q, r, s, p', q', r' and s' independently represent an integer of 0 to 4, provided that all of these symbols cannot be 0 in a single molecule.

## Description

### Technical Field

The present invention relates to a solid polymer electrolyte, and more particularly, to a polyethersulfone polymer electrolyte having a highly hydrophobic and rigid structural unit and a highly hydrophobic and flexible structural unit in the polymer main chain, a membrane containing the polymer electrolyte, and a method for producing the polymer. The polymer electrolyte obtainable by the present invention, or a membrane containing the polymer electrolyte, is very useful as an electrolyte membrane for fuel cells.

### Background Art

Polymers having an ionic conductive group such as a sulfonic acid group in the polymer chain, have a function of firmly binding to a particular ion or selectively allowing permeation of a cation or an anion, and can therefore be used in a wide variety of applications as solid polymer electrolytes. As the polymers are formed into particles, fibers or films, the polymers may be utilized in many fields such as electrodialysis, electrolyte diaphragm for batteries, and diffusion dialysis.

For example, perfluorosulfonic acid-based materials including Nafion (registered trademark, manufactured by DuPont Company), have high chemical durability and thus withstand the use even under severe conditions, and prolonged service life can be secured as well. Therefore, such polymers have been widely used and are also considered promising for the use in electrolyte membranes for fuel cells. However, fluorine-based materials have flaws such as that the materials are highly expensive, have low glass transition temperatures and, cannot be used under high temperature conditions, and have poor recyclability.

There has been suggested, as an electrolyte membrane that replaces a perfluorosulfonic acid membrane, a solid polymer electrolyte membrane produced by introducing an ion exchange group such as a sulfonic acid group, into an engineering plastic polymer, such as polyether ketone, polyphenylene or polyethersulfone. Particularly, polyethersulfone polymers exhibit high ion conductivity, and production thereof is achieved relatively easily at low cost, and therefore, a variety of such polymers have been suggested (Patent Document 1 and Patent Document 2). However, in regard to these polyethersulfone polymer electrolytes, since most of them have the aromatic rings in the main chain directly sulfonated, sulfonic acid is prone to be detached, and the polymers have a problem with chemical durability.

Meanwhile, polyethersulfone polymers to which sulfoalkyl groups are bonded have been reported (Patent Document 3). These polymer electrolytes have high ion conductivity and are also excellent in terms of battery performance, and detachment of sulfonic acid groups is also suppressed. However, these polymer electrolytes have a flaw that they are highly likely to swell in water or methanol.

For this reason, there is a report on an example of introducing a new aromatic residue to the structure of a main chain (Patent Document 4). This prior art document discloses an electrolyte having a rigid and highly hydrophobic biphenylene moiety.

Patent Document 1: Japanese Patent Application Laid-Open (JP-A) No. 2003-31232
Patent Document 2: JP-ANo. 2005-206807
Patent Document 3: Japanese Patent No. 3607862
Patent Document 4: Japanese Patent No. 3561250

### Disclosure of Invention

### Problem to be Solved by the Invention

It is an object of the present invention to provide a polyethersulfone polymer electrolyte which has excellent durability and particularly excellent swelling resistance, while maintaining high ion conductivity, and which can be produced at low cost, an electrolyte membrane, and a method for producing the polyethersulfone polymer electrolyte.

### Means for Solving Problem

The inventors of the present invention conducted a thorough investigation in order to solve the problems described above, and as a result, the inventors found that when a highly hydrophobic and rigid structural unit and a highly hydrophobic and flexible structural unit are simultaneously incorporated into a polyethersulfone unit which has high ion conductivity and is easily swellable, the above-described object of obtaining a polymer electrolyte having high ion conductivity and suppressed swellability can be achieved, thus completing the present invention.

That is, the present invention relates to the following:

(1) a polyethersulfone polymer electrolyte simultaneously having a structural unit represented by the following formula (I) and a structural unit represented by the following formula (II):

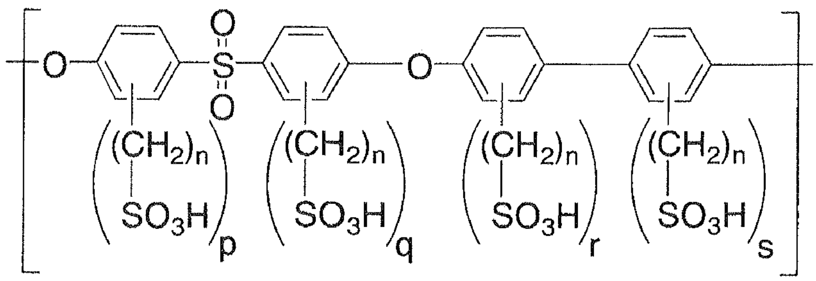

(I)

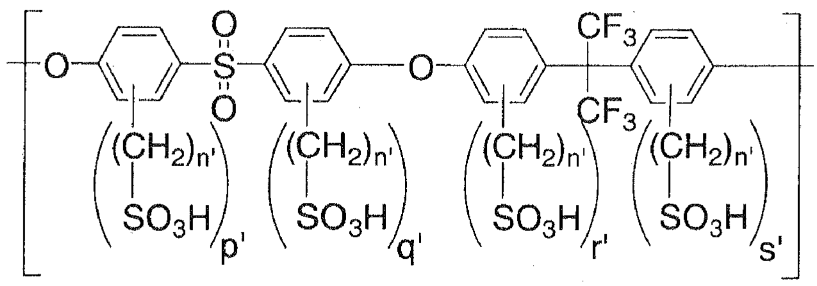

(II)

wherein in the above formula, n and n' each independently represent an integer from 1 to 6; p, q, r, s, p', q', r' and s' each independently represent an inter from 0 to 4, and they do not all simultaneously represent zero;

(2) the polyethersulfone polymer electrolyte as described in the above item (1), wherein the copolymerization ratio R of the structural unit represented by the formula (I) to the structural unit represented by the formula (II) is $0.1 < R < 10$;
(3) the polyethersulfone polymer electrolyte as described in the above item (1) or (2), wherein all of n = all of n' =1;
(4) the polyethersulfone polymer electrolyte as described in any one of the above items (1) to (3), wherein the equivalent weight per mole of sulfonic acid groups is from 200 to 1000 g/mol;
(5) a method for producing the polyethersulfone polymer electrolyte as described in any one of the above items (1) to (4), the method including subjecting a polyethersulfone copolymer having a structural unit represented by the following formula (III) and a structural unit represented by the following formula (IV), to halogenoalkylation, subsequently to acylthiolation, and then to oxidation;

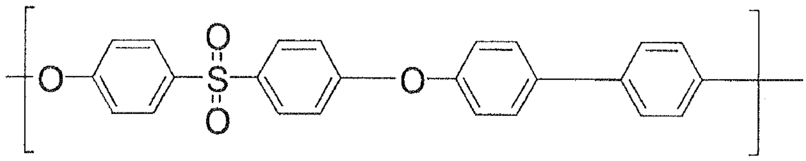

(III)

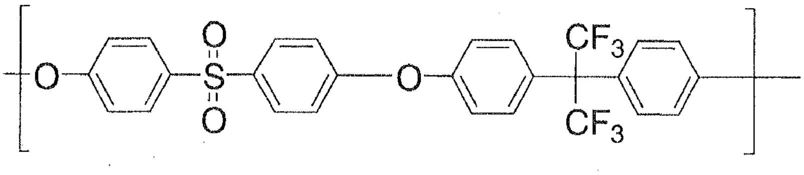

(IV)

(6) a solid polymer electrolyte membrane comprising the polyethersulfone polymer electrolyte as described in any one of the above items (1) to (4);
(7) a solid polymer electrolyte membrane, comprising a polyethersulfone polymer electrolyte that is obtained by introducing a sulfo-(C1-C6)alkyl group to the polyethersulfone copolymer having a structural unit represented by the formula (III) and a structural unit represented by the formula (IV) as described in the above item (5); and
(8) a solid polymer type fuel cell having the solid polymer electrolyte membrane as described in the above item (6) or (7).

Effect of the Invention

According to the present invention, swelling in water, methanol or the like can be suppressed to a very low level while high ion conductivity is maintained, by simultaneously incorporating a highly hydrophobic and rigid structural unit and a highly hydrophobic and flexible structural unit to a polyethersulfone unit which is highly ion conductive and easily swellable. Therefore, a polyethersulfone polymer electrolyte which is sufficiently applicable to fuel cells, and a membrane of the polyethersulfone polymer electrolyte can be provided.

Best Mode(s) for Carrying out the Invention

Hereinafter, the present invention will be described in detail.
The polyethersulfone polymer electrolyte of the present invention is constituted of a polyethersulfone polymer which simultaneously contains structurual units represented by the following formulae (I) and (II):
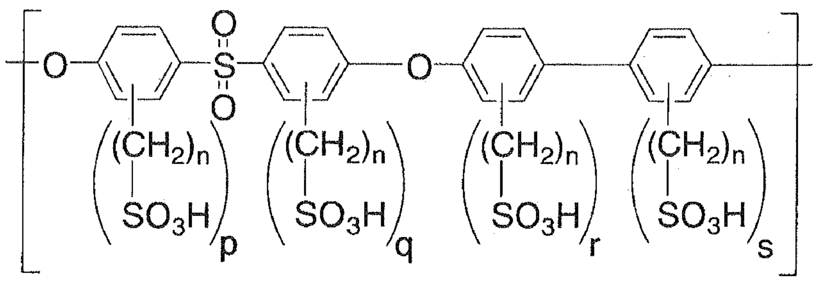

(I)

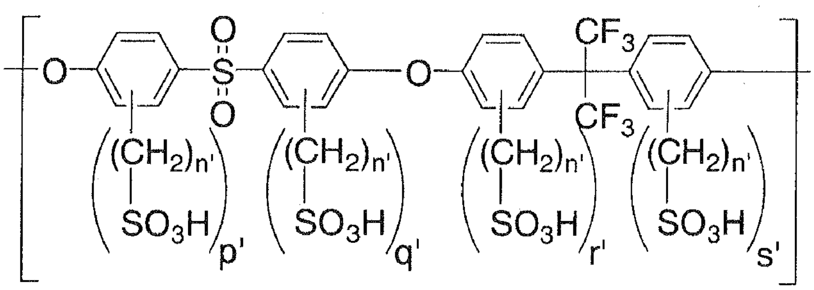

(II)

wherein in the above formula, n and n' each independently represent an integer from 1 to 6; p, q, r, s, p', q', r' and s' each independently represent an integer from 0 to 4, and they do not all simultaneously represent zero.
In the polyethersulfone polymer electrolyte of the present invention, the structural unit (I) includes a biphenylene structure and thus contributes to the highly hydrophobic and rigid characteristics, while the structural unit (II) includes a

hexafluoroisopropylidene structure and thus contribute to the highly hydrophobic and flexible characteristics.

In regard to the polyethersulfone polymer electrolyte of the present invention, the characteristics of the electrolyte can be arbitrarily changed by altering the copolymerization ratio R of the formula (I) to the formula (II). However, from the viewpoint of suppressing swellability to a minimal level while maintaining ion conductivity at a high level, the copolymerization ratio R is preferably $0.1 < R < 10$. Particularly, it is most preferable that the copolymerization ratio R be in the range of $0.4<R<2.5$.

In the above formula (I) and formula (II), n and n' each independently represent an integer from 1 to 6, and although there are no particular limitations, it is most suitable when all of n = all of n' =1, from the viewpoint of achieving a good balance between ion conductivity and durability.

The equivalent weight per mole of sulfonic acid groups of the polyethersulfone polymer electrolyte of the present invention is preferably from 200 to 1000 g/mol, and is more preferably from 400 to 600 g/mol. If the sulfonic acid equivalent weight is greater than 1000 g/mol, sufficient ion conductivity cannot be obtained, and if the sulfonic acid equivalent weight is smaller than 200 g/mol, water resistance and solvent resistance are decreased, and the polyethersulfone polymer electrolyte is not suitable for the use as an electrolyte. Here, the sulfonic acid equivalent weight can be measured by proton NMR spectroscopy, elemental analysis, acid-base titration and the like.

Furthermore, in regard to the polyethersulfone polymer electrolyte of the present invention, the amount of introduction of the sulfo-(C1-C6)alkyl group can be calculated as an amount of introduction of sulfo-(C1-C6)alkyl groups included in one repeating unit (i.e., $(p + q + r + s) \times R + p' + q' + r' + s'$), by first defining the molecular weight of repeating units as [molecular weight of (I)] x R + [molecular weight of (II)], and measuring and calculating the sulfonic acid equivalent weight, and then dividing the sulfonic acid equivalent weight by the molecular weight of repeating units.

The molecular weight of the polyethersulfone polymer electrolyte of the present invention may be of any value equal to or greater than 1000 as the number average molecular weight obtained by gel permeation chromatography and calculated relative to polystyrene standards, and the number average molecular weight is preferably 10,000 or greater and 500,000 or less, and more preferably 20,000 or greater and 200,000 or less. Furthermore, the molecular weight may be of any value 1000 or greater as the weight average molecular weight obtained by gel permeation chromatography and calculated relative to polystyrene standards, and the weight average molecular weight is preferably 20,000 or greater and 1,000,000 or less, and more preferably 40,000 or greater and 500,000 or less.

Next, a method for producing the polyethersulfone polymer electrolyte of the present invention will be described.

The polyethersulfone polymer electrolyte of the present invention is obtained by, for example, producing a polyethersulfone copolymer containing a structure in which structural units represented by the following formulae (III) and (IV) are copolymerized, at any suitable copolymerization ratio, and subjecting this polyethersulfone copolymer to halogenoalkylation, subsequently to acylthiolation, and then to oxidation.

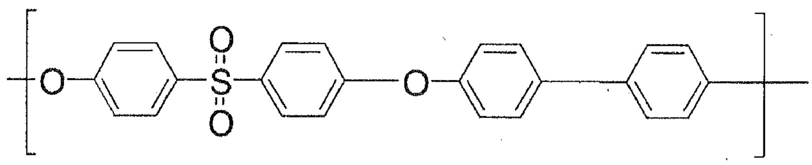
(III)

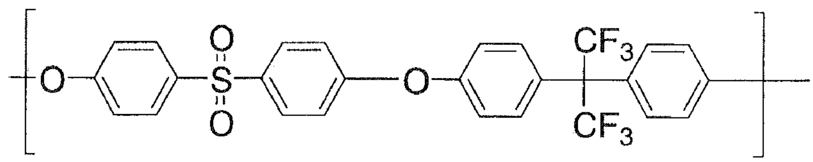
(IV)

In regard to the polyethersulfone copolymer having the structural unit (III) and structural unit (IV) which constitute the main chain skeleton of the polyethersulfone polymer electrolyte of the present invention, the mode of polymerization may be any of block copolymerization or random copolymerization. A polyethersulfone copolymer containing a structure in which the structural units represented by the formulae (III) and (IV), which constitute the main chain, can be easily synthesized by those methods that have been hitherto reported. For example, a method of polycondensing dihalogenophenylsulfone and biphenol in the presence of an alkali as described in JP-A No. 10-21943, is convenient and also capable of synthesis in large quantities, thereby being useful.

In regard to the method for producing the polyethersulfone polymer electrolyte of the present invention, in a

preferred synthesis example for the polyethersulfone copolymer, 4,4'-dichlorodiphenylsulfone, 4,4'-biphenol (BP) and 2,2-bis(4-hydroxyphenyl)hexafluoropropane (BisAF) are dissolved in N,N-dimethylacetamide (DMAc), toluene and potassium carbonate are added thereto, and then the mixture is dehydrated and heated to reflux at 140°C to 150°C under nitrogen atmosphere. In the middle of the course, water and toluene are distilled off, and then polymerization is further carried out for 20 hours or longer at 160°C to 165°C to allow polymerization to sufficiently proceed. After the reaction, salts produced therein are removed by filtration, and the filtrate is subjected to reprecipitation with methanol, acetone or water, to thereby obtain a polymer. Thereafter, the polymer is washed with water and dried, and thus a polyethersulfone copolymer can be obtained. 4,4'-Difluorodiphenylsulfone may also be used as a raw material in place of 4,4'-dichlorodiphenylsulfone. Furthermore, it is preferable that the molar amount of 4,4'-dichlorodiphenylsulfone (or 4,4'-difluorodiphenylsulfone) be in slight excess (for example, 1.01 to 1.05 times) of the sum of the molar amounts of BP and BisAF.

In regard to the above description, the copolymerization ratio of the polyethersulfone copolymer can be adjusted to any arbitrary ratio by adjusting the molar ratio of BP and BisAF. Here, when the said copolymerization ratio is adjusted, the copolymerization ratio R of the formula (I) to the formula (II) in the polyethersulfone polymer electrolyte of the present invention can be adjusted to any arbitrary value.

The method described above is a synthesis example for a random copolymer. When it is intended to obtain a block copolymer, the block copolymer can be obtained by first polymerizing 4,4'-dichlorodiphenylsulfone with BP, carrying out the polymerization to a sufficient extent, subsequently adding BisAF, and then carrying out polymerization. Alternatively, the block copolymer can be obtained by first polymerizing 4,4'-dichlorodiphenylsulfone with BisAF, carrying out the polymerization to a sufficient extent, subsequently adding BP, and then carrying out polymerization.

In regard to the method for producing the polyethersulfone polymer electrolyte of the present invention, any method can be used for the halogenoalkylation of the polyethersulfone copolymer without any particular limitations. There are known, for example, a method of substituting the hydrogen or halogen atom on an aromatic ring by lithium using an organolithium compound (lithiation), and subsequently subjecting the resultant to halogenoalkylation with a dihalogenoalkane; or a method of introducing a halogenoalkyl group using a polymethylenehalogenium ion.

Particularly, halogenomethylation of an aromatic ring is useful because the reaction is easily controlled, and synthesis in large quantities is also possible. Any method can be used arbitrarily without any particular limitations for the halogenomethylation of aromatic rings in the polymer, but for example, a method of subjecting the aromatic rings to chloromethylation using hydrogen chloride gas and formaldehyde, or a method of subjecting the aromatic rings to chloromethylation using a Lewis acid catalyst and chloromethyl methyl ether, may be used. For example, the method described in JP-A No. 2005-126532, which uses formaldehyde dialkylacetal, thionyl chloride and a Lewis acid catalyst, is useful because the reaction can be easily controlled, synthesis in large quantities is possible, and the production cost is maintained low.

In regard to the method for producing the polyethersulfone polymer electrolyte of the present invention, there are no particular limitations on the reactive agent to achieve acylthiolation of the halogenomethylated polyethersulfone copolymer. Examples of the reactive agent include thiocarboxylic acids such as thioacetic acid, thiopropanoic acid, thiobutanoic acid, thiobenzoic acid and thiotoluic acid, and metal salts, such as sodium salts and potassium salts, of those thiocarboxylic acids. Particularly, potassium thioacetate is preferred. In regard to the amount of the acylthiolating agent used, it is sufficient to use the acylthiolating agent in an equivalent or a slightly excessive amount (1 to 1.2 equivalents) based on the halogenoalkyl groups. The reaction temperature for acylthiolation may be appropriately selected in the range of 0°C to 100°C, and is preferably 30°C to 60°C. A wide variety of solvents can be arbitrarily used as the reaction solvent for acylthiolation, but aprotic polar solvents such as N-methylpyrrolidone, N,N-dimethylformamide, N,N-dimethylacetamide and dimethyl sulfoxide are preferred.

In the method for producing the polyethersulfone polymer electrolyte of the present invention, a wide variety of oxidizing agents such as organic peroxides and inorganic peroxides can be used for the oxidation of the acylthiolated polyethersulfone copolymer, and for example, aqueous hydrogen peroxide and peracetic acid are suitably used. The amount of the oxidizing agent is preferably from one equivalent to ten equivalents based on acylthio groups. The reaction temperature for the oxidation of acylthio groups is usually about 20°C to 90°C, and is preferably 40°C to 60°C. As the solvent for the oxidation reaction of the acylthio groups, those solvents usually used in oxidation reactions, such as acetic acid, dichloromethane and formic acid, or mixed solvents thereof can be widely used.

In the method for producing the polyethersulfone polymer electrolyte of the present invention, the conversion from a halogenoalkyl group to a sulfoalkyl group is quantitatively carried out. Therefore, when the ratio of introduction of the halogenoalkyl group is controlled in the halogenoalkylation by adjusting the amount of reactive agents, reaction temperature and reaction time, a polyethersulfone polymer electrolyte having an arbitrary sulfonic acid group equivalent weight can be synthesized. In particular, since halogenomethylation of aromatic rings allows easy control of the reaction, the reaction is useful for obtaining an aromatic hydrocarbon-based ion-conductive polymer electrolyte having a desired ion exchange group equivalent weight.

According to a preferred exemplary aspect of the method for producing the polyethersulfone polymer electrolyte

of the present invention, a polyethersulfone copolymer having a structure in which the structural unit components represented by the formulae (III) and (IV) are copolymerized, is dissolved in a reaction solvent such as nitrobenzene or tetrachloroethane, and dimethoxymethane, thionyl chloride and tin tetrachloride are added thereto. The mixture is stirred for an appropriate time at a temperature of 50°C to 70°C, and thereby chloromethylation is carried out until a desired ratio of introduction is obtained. The reaction solution is reprecipitated with methanol or acetone, and is filtered and then dried. Thus, a chloromethylated polyethersulfone copolymer is obtained. This is dissolved in N-methylpyrrolidone or N, N-dimethylformamide, potassium thioacetate is added thereto, and the mixture is stirred for 2 hours at room temperature. The reaction solution is reprecipitated with water, acetone or methanol, and is filtered and then dried. Thus, an acetylthiolated polyethersulfone copolymer is obtained. This is dissolved in a mixed solvent composed of acetic acid, formic acid, dichloromethane and the like, aqueous hydrogen peroxide or peracetic acid is added thereto, and the mixture is stirred for one hour at 40°C to 60°C. The reaction solution is reprecipitated with dilute sulfuric acid, and is filtered. Subsequently, the filtered product is purified by repeating washing with water, and then dried, and thus a polyethersulfone polymer electrolyte can be obtained.

When the polyethersulfone polymer electrolyte of the present invention is used, for example, as an electrolyte of a fuel cell, the polymer electrolyte is usually used in the form of a membrane. There are no particular limitations on the method of making the polyethersulfone polymer electrolyte of the present invention into a membrane, and methods such as a casting method, a melting method, an impregnation method, a grafting method, and a filling method can be appropriately employed.

For example, a casting method is a method of forming a film by dissolving the polymer or a composition thereof in an appropriate solvent, applying the solution by flow casting on a substrate such as a glass plate or a polyethylene terephthalate film, and removing the solvent. There are no particular limitations on the solvent used in the film formation as long as the solvent can dissolve the polymer and then can be removed by drying or the like. Suitable examples include aprotic polar solvents such as N,N-dimethylformamide, N,N-dimethylacetamide, N-methyl-2-pyrrolidone, and dimethyl sulfoxide; alkylene glycol monoalkyl ethers such as ethylene glycol monomethyl ether, ethylene glycol monoethyl ether, propylene glycol monomethyl ether, and propylene glycol monoethyl ether; halogenated solvents such as dichloroethane and trichloroethane; alcohols such as isopropyl alcohol and t-butyl alcohol; and mixed solvents or hydrated solvents of these solvents.

Upon the production of the solid polymer electrolyte membrane of the present invention, additives that are used in conventional polymers, such as a plasticizer, a stabilizer, a mold releasing agent, a reinforcing agent and an oxidation inhibitor, can be used to an extent that does not impair the purpose of the present invention.

There are no particular limitations on the thickness of the solid polymer electrolyte membrane of the present invention, but the thickness is usually preferably in the range of from 10 to 100 μm. If the membrane is thinner than 10 μm, practical strength is not sufficient; and handling may be difficult in many cases. On the other hand, if the membrane is thicker than 100 μm, the membrane resistance increases, so that the membrane may not sufficiently exhibit the characteristics as an electrolyte. The thickness of the polymer electrolyte membrane can be controlled, in the case of a casting method, by means of the concentration of the casting solution and the applied thickness on the substrate.

For the purpose of improving the properties of the solid polymer electrolyte membrane of the present invention, the solid polymer electrolyte membrane can also be made into a composite alloy with another polymer, by methods such as mixing and co-casting. Furthermore, for the purpose of enhancing mechanical strength, crosslinking by an electron beam or a radiation, composite production by impregnation into a porous film or sheet, reinforcement by blending with fibers or pulp, and the like are also applicable, to an extent that does not impair the purpose of the present invention.

When the solid polymer electrolyte membrane of the present invention is bonded and laminated with an electrode catalyst, a gas diffusion layer and a current collector on both sides or on one side of the membrane, the assembly can be used as a fuel cell. There are no particular limitations on the fuel, and a variety of fuels can be used. However, the solid polymer electrolyte membrane of the present invention is particularly useful for fuel cells using hydrogen or methanol as fuel. There are no particular limitations on the method for producing a fuel cell, and fuel cells can be produced using known methods. For example, a fuel cell can be produced by a method of hot pressing an electrode catalyst in which platinum or a platinum-ruthenium alloy is supported on a carbon electrode, together with an electrolyte binder, a method of bonding the components with an adhesive, or the like.

## Examples

Hereinafter, the present invention will be described in more detail by way of Examples. However, the present invention is not intended to be limited by any means to these Examples.

### [Measurement of ion exchange group equivalent weight (sulfonic acid equivalent weight)]

A certain amount of a sample was measured (amount of sample: A g) and was dissolved in dimethyl sulfoxide.

Subsequently, the solution was titrated with a 0.1 N aqueous solution of potassium hydroxide (titer: F) (titration amount: B ml), and the ion exchange group equivalent weight (EW) was determined by the following expression:

$$EW = (1000 \times A)/(0.1 \times B \times F)$$

[Measurement of proton conductance] Proton conductance was measured by an alternating current method in a constant temperature-constant humidity tank at a temperature of 40°C. Here, if the proton conductance is 0.01 S/cm or greater, and preferably 0.03 S/cm or greater, the sample can be said to have satisfactory proton conductivity. For example, Nafion (registered trademark, manufactured by DuPont Company), which is well known as a fuel cell electrolyte membrane, exhibits a proton conductance of 0.078 S/cm under the present measurement conditions.

[Evaluation of swellability in water] A membrane cut to a certain size was immersed in water and was maintained at 80°C for 2 hours. Thereafter, the swellability in water of the membrane was evaluated by measuring the dimension of the swelled membrane, and determining the ratio of area increase therefrom.

[Evaluation of swellability in methanol] A membrane cut to a certain size was immersed in an aqueous solution of methanol having a concentration of 40 vol%, and was maintained at 50°C for 24 hours. Thereafter, the swellability in aqueous methanol solution of the membrane was evaluated by measuring the dimension of the swelled membrane, and determining the ratio of area increase therefrom.

[Fenton's test (oxidation resistance test)] A membrane cut to a certain size was maintained at 80°C in a 3% aqueous solution of hydrogen peroxide containing 3 ppm of iron(II) sulfate, and the ratio of weight decrease of the membrane after one hour was evaluated.

Example 1

Synthesis of sulfomethylated polyethersulfone polymer electrolyte (A-1)

(In the formula (V), x = y = 1, R = x/y =1)

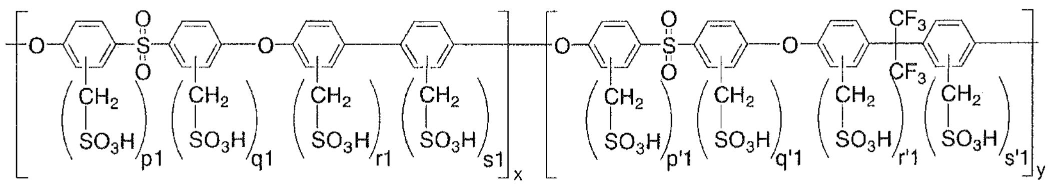

(V)

wherein in the forrnula(V), p1, q1, r1, s1, p'1, q'1, r'1 and s'1 each independently represent an integer from 0 to 4, and they do not all simultaneously represent zero.

In a 1-L three-necked flask equipped with a stirrer, a thermometer, a Dean-Stark tube and a reflux tube, 181 g (0.63 mol) of 4,4'-dichlorodiphenylsulfone, 56 g (0.3 mol) of 4,4'-biphenol (BP), 101 g (0.3 mol) of 2,2-bis(4-hydroxyphenyl) hexafluoropropane (BisAF), 99 g (0.72 mol) of potassium carbonate, 1000 mL of DMAc, and 100 mL of toluene were placed, and the mixture was stirred under reflux for 2 hours at 150°C in a nitrogen atmosphere. The water produced with the progress of reaction was removed from the system by azeotropically boiling with toluene. Thereafter, toluene was also distilled off, the reaction temperature was raised to 160°C, and the reaction liquid was continuously stirred under reflux for 20 hours. The reaction liquid thus obtained was filtered to remove inorganic salts produced therein, and the residue was reprecipitated with 4 L of methanol to thereby obtain a polymer. The polymer was filtered and dried, and thus 280 g of a polyethersulfone copolymer was obtained.

In a 2-L three-necked flask equipped with a stirrer, a thermometer, a reflux tube and a dropping funnel, 80 g of the above polyethersulfone copolymer, 80 g of dimethoxymethane, 80 g of thionyl chloride, and 900 mL of nitrobenzene were placed, and while the mixture was stirred, 12 g of tin tetrachloride was added dropwise to the flask. The mixture was allowed to react for 4 hours at 60°C. The reaction liquid was introduced into 2.5 L of methanol to reprecipitate a polymer, and the polymer was filtered and dried. Thus, 95 g of a chloromethylated polyethersulfone copolymer was obtained.

In a 500-mL three-necked flask equipped with a stirrer and a thermometer, 40 g of the above chloromethylated

polyethersulfone copolymer, 12 g of potassium thioacetate, and 300 mL of N,N-dimethylformamide were placed, and the mixture was allowed to react for one hour at room temperature. The reaction liquid was introduced into 1.5 L of water to reprecipitate a polymer, and the polymer was filtered and dried. Thus, 40 g of an acetylthiolated polyethersulfone copolymer was obtained.

In a 1-L three-necked flask equipped with a stirrer, a thermometer, a reflux tube and a dropping funnel, 38 g of the above acetylthiolated polyethersulfone copolymer, 150 mL of acetic acid, 100 mL of formic acid, and 650 mL of dichloromethane were placed, and while the mixture was stirred, 50 g of a 34% aqueous solution of hydrogen peroxide was added dropwise thereto. The resulting mixture was allowed to react for 2 hours at 40°C. The reaction liquid was reprecipitated with 850 L of a 5% aqueous solution of sulfuric acid, and a polymer was recovered by filtration. The polymer was washed with water until the washing liquid became neutral, and was dried. Thus, 20 g of a sulfomethylated polyethersulfone polymer electrolyte (A-1) was obtained. The molecular weight was 51,800 as the number average molecular weight and was 165,000 as the weight average molecular weight, which values were obtained by gel permeation chromatography and calculated relative to polystyrene standards.

Example 2

Production of sulfomethylated polyethersulfone polymer electrolyte membrane (A-1 membrane)

16 g of the sulfomethylated polyethersulfone polymer electrolyte (A-1) synthesized in Example 1 was dissolved in 44 g of N,N-dimethylacetamide, and thus a 27 wt% varnish for casting was prepared. The varnish was applied on a glass substrate, and this substrate was dried under reduced pressure in a constant temperature vacuum tank at 120°C for 90 minutes. After the drying, the membrane thus obtained was cut to a predetermined size and was peeled from the glass substrate. Thus, a sulfomethylated polyethersulfone polymer electrolyte membrane (A-1 membrane) was produced. This membrane was evaluated by various testing methods.

[Table]

| | |
|---|---|
| Ion exchange group equivalent weight | 557 g/mol |
| Proton conductance | 0.10 S/cm |
| Swellability (water) | 47% |
| Swellability (methanol) | 246% |
| Fenton's test | weight reduction ratio 4% |

Example 3

Synthesis of sulfomethylated polyethersulfone polymer electrolyte (B-1)

(In the formula (V), x = 2, y=1, R = x/y = 2)

In a 1-L three-necked flask equipped with a stirrer, a thermometer, a Dean-Stark tube and a reflux tube, 181 g (0.63 mol) of 4,4'-dichlorodiphenylsulfone, 74 g (0.4 mol) of 4,4'-biphenol (BP), 67 g (0.2 mol) of 2,2-bis(4-hydroxyphenyl) hexafluoropropane (BisAF), 99 g (0.72 mol) of potassium carbonate, 1000 mL of DMAc, and 100 mL of toluene were placed, and the mixture was stirred under reflux for 2 hours at 150°C in a nitrogen atmosphere. The water produced with the progress of reaction was removed from the system by azeotropically boiling with toluene. Thereafter, toluene was also distilled off, the reaction temperature was raised to 160°C, and the reaction liquid was continuously stirred under reflux for 20 hours. The reaction liquid thus obtained was filtered to remove inorganic salts produced therein, and the residue was reprecipitated with 4 L of methanol to thereby obtain a polymer. The polymer was filtered and dried, and thus 263 g of a polyethersulfone copolymer was obtained.

In a 300-mL three-necked flask equipped with a stirrer, a thermometer, a reflux tube and a dropping funnel, 20 g of the above polyethersulfone copolymer, 40 g of dimethoxymethane, 40 g of thionyl chloride, and 200 mL of nitrobenzene were placed, and while the mixture was stirred, 2.4 g of tin tetrachloride was added dropwise to the flask. The mixture was allowed to react for 4.5 hours at 40°C. The reaction liquid was introduced into 1 L of methanol to reprecipitate a polymer, and the polymer was filtered and dried. Thus, 20 g of a chloromethylated polyethersulfone copolymer was obtained.

In a 500-mL three-necked flask equipped with a stirrer and a thermometer, 20 g of the above chloromethylated polyethersulfone copolymer, 8 g of potassium thioacetate, and 300 mL of N,N-dimethylformamide were placed, and the mixture was allowed to react for one hour at room temperature. The reaction liquid was introduced into 1 L of water to

reprecipitate a polymer, and the polymer was filtered and dried. Thus, 20 g of an acetylthiolated polyethersulfone copolymer was obtained.

In a 1-L three-necked flask equipped with a stirrer, a thermometer, a reflux tube and a dropping funnel, 20 g of the above acetylthiolated polyethersulfone copolymer, 100 mL of acetic acid, 100 mL of formic acid, and 440 mL of dichloromethane were placed, and while the mixture was stirred, 50 g of a 34% aqueous solution of hydrogen peroxide was added dropwise thereto. The resulting mixture was allowed to react for 2 hours at 40°C. The reaction liquid was reprecipitated with 550 L of a 10% aqueous solution of sulfuric acid, and the polymer was recovered by filtration. The polymer was washed with water until the washing liquid became neutral, and was dried. Thus, 12 g of a sulfomethylated polyethersulfone polymer electrolyte (B-1) was obtained. The molecular weight was 75,300 as the number average molecular weight and was 240,000 as the weight average molecular weight, which values were obtained by gel permeation chromatography and calculated relative to polystyrene standards.

Example 4

Production of sulfomethylated polyethersulfone polymer electrolyte membrane (B-1 membrane)

A sulfomethylated polyethersulfone polymer electrolyte membrane (B-1 membrane) was produced by forming a film of the sulfomethylated polyethersulfone polymer electrolyte obtained in Example 3 (B-1), by the same method as that used in Example 2. This membrane was evaluated by various testing methods.

[Table]

| | |
|---|---|
| Ion exchange group equivalent weight | 544 g/mol |
| Proton conductance | 0.098 S/cm |
| Swellability (water) | 44% |
| Swellability (methanol) | 274% |
| Fenton's test | weight reduction ratio 7% |

Example 5

Synthesis of sulfomethylated polyethersulfone polymer electrolyte (B-2)

(In the formula (V), x = 2, y =1, and R = x/y = 2)

22 g of a chloromethylated polyethersulfone copolymer was synthesized by the same method as that used in Example 3, using 20 g of the polyethersulfone copolymer synthesized in Example 3 as a raw material, and using 50 g of dimethoxymethane, 50 g of thionyl chloride, and 2.4 g of tin tetrachloride. The subsequent processes were carried out by the same method as that used in Comparative Example 3, and thus 11 g of a sulfomethylated polyethersulfone polymer electrolyte (B-2) was obtained. The molecular weight was 67,000 as the number average molecular weight and was 178,000 as the weight average molecular weight, which values were obtained by gel permeation chromatography and calculated relative to polystyrene standards.

Example 6

Production of sulfomethylated polyethersulfone polymer electrolyte membrane (B-2 membrane)

A sulfomethylated polyethersulfone polymer electrolyte membrane (B-2 membrane) was produced by forming a film of the sulfomethylated polyethersulfone polymer electrolyte obtained in Example 5 (B-2), by the same method as that used in Example 2. This membrane was evaluated by various testing methods.

[Table]

| | |
|---|---|
| Ion exchange group equivalent weight | 516 g/mol |
| Proton conductance | 0.10 S/cm |
| Swellability (water) | 52% |
| Swellability (methanol) | 611 % |

(continued)

| | |
|---|---|
| Fenton's test | weight reduction ratio 38% |

Comparative Example 1

Sulfomethylated polyethersulfone (VI) membrane

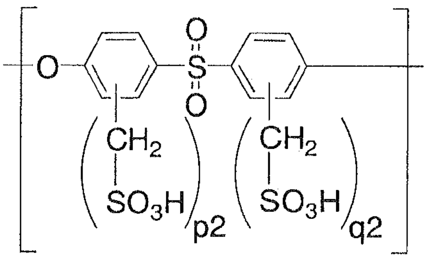

(VI)

wherein in the formula (VI), p2 and q2 each independently represent an integer from 0 to 4, and they do not all simultaneously represent zero.

In 3000-mL three-necked flask equipped with a stirrer, a thermometer, a reflux tube and a dropping funnel, 150 g of polyethersulfone (SUMIKAEXCEL 5200P, manufactured by Sumitomo Chemical Co., Ltd.), 75 g of dimethoxymethane, 113 g of thionyl chloride, and 1500 mL of nitrobenzene were placed, and while the mixture was stirred, 50 g of tin tetrachloride was added dropwise thereto. The resulting mixture was allowed to react for 5 hours at 65°C. The reaction liquid was introduced into 3 L of methanol to reprecipitate a polymer, and the polymer was filtered and dried. Thus, 190 g of a chloromethylated polyethersulfone was obtained.

In a 3-L three-necked flask equipped with a stirrer and a thermometer, 130 g of the above chloromethylated polyethersulfone, 27 g of potassium thioacetate, and N,N-dimethylformamide were placed, and the mixture was allowed to react for 2 hours at room temperature. The reaction liquid was introduced into 5 L of water to reprecipitate a polymer, and the polymer was filtered and dried. Thus,120 g of an acetylthiolated polyethersulfone was obtained.

In a 3-L three-necked flask equipped with a stirrer, a thermometer, a reflux tube and a dropping funnel, 120 g of the above acetylthiolated polyethersulfone, 240 mL of acetic acid, 480 mL of formic acid, and 1700 mL of dichloromethane were placed, and while the mixture was stirred, 144 g of a 34% aqueous solution of hydrogen peroxide was added dropwise thereto. The resulting mixture was allowed to react for one hour at 40°C. The reaction liquid was reprecipitated with 3 L of a 10% aqueous solution of sulfuric acid, and a polymer was recovered by filtration. The polymer was washed with water until the washing liquid became neutral, and was dried. Thus, 100 g of a sulfomethylated polyethersulfone (VI) was obtained. The molecular weight was 65,800 as the number average molecular weight and was 147,000 as the weight average molecular weight, which values were obtained by gel permeation chromatography and calculated relative to polystyrene standards.

80 g of the sulfomethylated polyethersulfone thus synthesized was dissolved in 268 g of N,N-dimethylacetamide, and thus a 23 wt% varnish for casting was prepared. The varnish was applied on a glass substrate, and this was dried under reduced pressure in a constant temperature vacuum tank at 120°C for 90 minutes. After the drying, the membrane thus obtained was cut to a predetermined size and was peeled from the glass substrate. Thus, a sulfomethylated polyethersulfone (VI) membrane was produced. The evaluation results for the membrane thus obtained are as follows.

[Table]

| | |
|---|---|
| Ion exchange group equivalent weight | 696 g/mol |
| Proton conductance | 0.069 S/cm |
| Swellability (water) | 69% |
| Swellability (methanol) | 304% |
| Fenton's test | dissolved after 60 minutes |

Comparative Example 2

Sulfomethylated polyphenylsulfone (VII) membrane

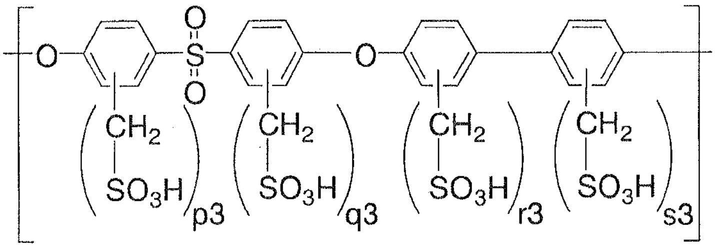

(VII)

wherein in the formula (VII), p3, q3, r3 and s3 each independently represent an integer from 0 to 4, and they do not all simultaneously represent zero.
270 g of a chloromethylated polyphenylsulfone was synthesized by the same method as that used in Comparative Example 1, using 150 g of polyphenylsulfone (manufactured by Sigma-Aldrich Company) as a raw material, and using 1500 mL of tetrachloroethane instead of nitrobenzene, and 255 g of dimethoxymethane, 208 g of thionyl chloride and 35 g of tin tetrachloride. The subsequent processes were carried out by the same method as that used in Comparative Example 1, and thus 91 g of a sulfomethylated polyphenylsulfone (VII) was obtained. The molecular weight was 87,800 as the number average molecular weight and was 333,000 as the weight average molecular weight, which values were obtained by gel permeation chromatography and calculated relative to polystyrene standards. The evaluation results for the sulfomethylated polyphenylsulfone (VII) membrane obtained after film formation are as follows.
[Table]

| | |
|---|---|
| Ion exchange group equivalent weight | 464 g/mol |
| Proton conductance | 0.13 S/cm |
| Swellability (water) | 60% |
| Swellability (methanol) | dissolved |
| Fenton's test | dissolved after 60 minutes |

Comparative Example 3

Sulfomethylated polysulfone AF (VIII) membrane

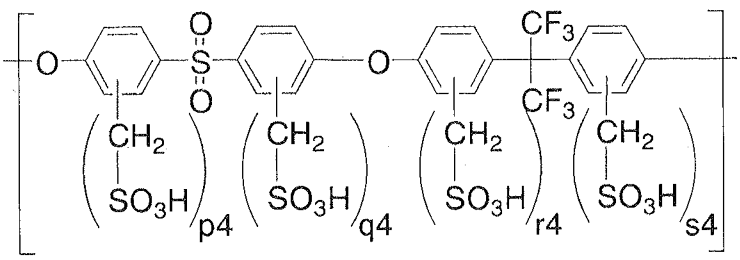

(VIII)

wherein in the formula (VIII), p4, q4, r4 and s4 each independently represent an integer from 0 to 4, and they do not all simultaneously represent zero.
In a 1-L three-necked flask equipped with a stirrer, a thermometer, a Dean-Stark tube and a reflux tube, 90.5 g (0.315

mol) of 4,4'-dichlorodiphenylsulfone,103 g (0.3 mol) of 2,2-bis(4-hydroxyphenyl)hexafluoropropane (BisAF), 50 g (0.36 mol) of potassium carbonate, 500 mL of DMAc, and 100 mL of toluene were placed, and the mixture was stirred under reflux for 2 hours at 150°C in a nitrogen atmosphere. The water produced with the progress of reaction was removed from the system by azeotropically boiling with toluene. Thereafter, toluene was also distilled off, the reaction temperature was raised to 160°C, and the reaction liquid was continuously stirred under reflux for 20 hours. The reaction liquid thus obtained was filtered to remove inorganic salts produced therein, and the residue was reprecipitated with 2 L of methanol to thereby obtain a polymer. The polymer was filtered and dried, and thus 171 g of polysulfone AF was obtained.

45 g of a chloromethylated polyphenylsulfone was synthesized by the same method as that used in Comparative Example 1, using 44 g of the above polysulfone AF as a raw material, and using 400 mL of nitrobenzene, 30 g of dimethoxymethane, 48 g of thionyl chloride, and 10 g of tin tetrachloride. The subsequent processes were carried out by the same method as that used in Comparative Example 1, and thus 39 g of a sulfomethylated polysulfone (VIII) was obtained. The molecular weight was 110,000 as the number average molecular weight and was 208,000 as the weight average molecular weight, which values were obtained by gel permeation chromatography and calculated relative to polystyrene standards. The evaluation results for the sulfomethylated polysulfone AF (VIII) membrane obtained after film formation are as follows.

[Table]

| | |
|---|---|
| Ion exchange group equivalent weight | 510 g/mol |
| Proton conductance | 0.15 S/cm |
| Swellability (water) | dissolved |
| Swellability (methanol) | dissolved |
| Fenton's test | dissolved after 30 minutes |

The respective evaluation results for the electrolyte membranes obtained in Examples 2, 4 and 6 and Comparative Examples 1, 2 and 3 are presented in the following Table 1.

Table 1

| | Proton conductance (S/cm) | Swellability (water) (area increase %) | Swellability (methanol) (area increase %) | Fenton's test (weight reduction %) |
|---|---|---|---|---|
| Example 2 | 0.10 | 47 | 246 | 4 |
| Example 4 | 0.098 | 44 | 274 | 7 |
| Example 6 | 0.10 | 52 | 611 | 38 |
| Comparative Example 1 | 0.069 | 69 | 304 | Dissolved after 60 minutes |
| Comparative Example 2 | 0.13 | 60 | Dissolved | Dissolved after 60 minutes |
| Comparative Example 3 | 0.15 | Dissolved | Dissolved | Dissolved after 30 minutes |

As it is obvious from the results of Table 1, since the electrolyte membranes obtained in Examples 2, 4 and 6 of the present invention have high proton conductance, the electrolyte membranes have excellent ion conductivity, and also have excellent swellability On the other hand, the electrolyte membranes obtained in Comparative Examples 1, 2 and 3 have been respectively dissolved away particularly in the Fenton's test (oxidation resistance), and thus it was found that the electrolyte membranes have a problem with the use as electrolyte membranes. Furthermore, the proton conductance is greater than the measured value of Nafion (0.078 S/cm), which is known as an electrolyte membrane for fuel cells, and thus the electrolyte membrane of the present invention is highly useful.

Example 7

Synthesis of sulfomethylated polyethersulfone polymer electrolyte (A-2)

(In the formula (V), x = y =1, R = x/y =1)

40 g of the polyethersulfone copolymer synthesized in Example 1 was used as a raw material, and 100 g of dimethoxymethane, 100 g of thionyl chloride, 14 g of tin tetrachloride, and 400 mL of nitrobenzene were used to carry out a reaction for 3 hours at 40°C, and thus 43 g of a chloromethylated polyethersulfone copolymer was synthesized by the same method as that used in Example 1. The subsequent processes were carried out by the same method as that used in Example 1, and thus 40 g of a sulfomethylated polyethersulfone polymer electrolyte (A-2) was obtained. The molecular weight was 54,800 as the number average molecular weight and was 113,000 as the weight average molecular weight, which values were obtained by gel permeation chromatography and calculated relative to polystyrene standards.

Example 8

Production of sulfomethylated polyethersulfone polymer electrolyte membrane (A-2 membrane)

A sulfomethylated polyethersulfone polymer electrolyte membrane (A-2 membrane) was produced by forming a film of the sulfomethylated polyethersulfone polymer electrolyte (A-2) by the same method as that used in Example 2. This membrane was evaluated by various testing methods.
[Table]

| | |
|---|---|
| Ion exchange group equivalent weight | 628 g/mol |
| Proton conductance | 0.068 S/cm |
| Swellability (water) | 36% |
| Swellability (methanol) | 97% |
| Fenton’s test | weight reduction ratio 20% |

Example 9

Synthesis of sulfomethylated polyethersulfone polymer electrolyte (A-3)

(In the formula (V), x = y =1, R = x/y =1)

20 g of the polyethersulfone copolymer synthesized in Example 1 was used as a raw material, and 50 g of dimethoxymethane, 50 g of thionyl chloride, 7 g of tin tetrachloride, and 230 mL of nitrobenzene were used to carry out a reaction for 4 hours at 40°C, and thus 20 g of a chloromethylated polyethersulfone copolymer was synthesized by the same method as that used in Example 1. The subsequent processes were carried out by the same method as that used in Example 1, and thus 13 g of a sulfomethylated polyethersulfone polymer electrolyte (A-3) was obtained. The molecular weight was 54,700 as the number average molecular weight and was 128,000 as the weight average molecular weight, which values were obtained by gel permeation chromatography and calculated relative to polystyrene standards.

Example 10

Production of sulfomethylated polyethersulfone polymer electrolyte membrane (A-3 membrane)

A sulfomethylated polyethersulfone polymer electrolyte membrane (A-3 membrane) was produced by forming a film of the sulfomethylated polyethersulfone polymer electrolyte (A-3) by the same method as that used in Example 2. This membrane was evaluated by various testing methods.
[Table]

| | |
|---|---|
| Ion exchange group equivalent weight | 599 g/mol |
| Proton conductance | 0.078 S/cm |

(continued)

| | |
|---|---|
| Swellability (water) | 40% |
| Swellability (methanol) | 180% |
| Fenton's test | weight reduction ratio 9% |

Example 11

Synthesis of sulfomethylated polyethersulfone polymer electrolyte (A-4)

(In the formula (V), x = y = 1, R = x/y = 1)

In a 1-L three-necked flask equipped with a stirrer, a thermometer, a Dean-Stark tube and a reflux tube, 175.6 g (0.612 mol) of 4,4'-dichlorodiphenylsulfone, 55.9 g (0.3 mol) of 4,4'-biphenol (BP), 100.9 g (0.3 mol) of 2,2-bis(4-hydroxyphenyl)hexafluoropropane (BisAF), 99 g (0.72 mol) of potassium carbonate, 1000 mL of DMAc, and 150 mL of toluene were placed, and the mixture was stirred under reflux for 2 hours at 150°C in a nitrogen atmosphere. The water produced with the progress of reaction was removed from the system by azeotropically boiling with toluene. Thereafter, toluene was also distilled off, the reaction temperature was raised to 160°C, and the reaction liquid was continuously stirred under reflux for 20 hours. The reaction liquid thus obtained was filtered to remove inorganic salts produced therein, and the residue was reprecipitated with 4 L of methanol to thereby obtain a polymer. The polymer was filtered and dried, and thus 311 g of a polyethersulfone copolymer was obtained.

20 g of the polyethersulfone copolymer thus obtained was used as a raw material, and 50 g of dimethoxymethane, 50 g of thionyl chloride, 8 g of tin tetrachloride, and 260 mL of nitrobenzene were used to carry out a reaction for 9 hours at 40°C, and thus 17 g of a chloromethylated polyethersulfone copolymer was synthesized by the same method as that used in Example 1. The subsequent processes were carried out by the same method as that used in Example 1, and thus 13 g of a sulfomethylated polyethersulfone polymer electrolyte (A-4) was obtained. The molecular weight was 95,500 as the number average molecular weight and was 215,000 as the weight average molecular weight, which values were obtained by gel permeation chromatography and calculated relative to polystyrene standards.

Example 12

Production of sulfomethylated polyethersulfone polymer electrolyte membrane (A-4 membrane)

A sulfomethylated polyethersulfone polymer electrolyte membrane (A-4 membrane) was produced by forming a film of the sulfomethylated polyethersulfone polymer electrolyte (A-4) by the same method as that used in Example 2. This membrane was evaluated by various testing methods.

[Table]

| | |
|---|---|
| Ion exchange group equivalent weight | 656g/mol |
| Proton conductance | 0.059 S/cm |
| Swellability (water) | 28% |
| Swellability (methanol) | 60% |
| Fenton's test | weight reduction ratio 23 % |

Example 13

Synthesis of sulfomethylated polyethersulfone polymer electrolyte (A-5)

(In the formula (V), x = y =1, R = x/y =1)

20 g of the polyethersulfone copolymer obtained in Example 11 was used as a raw material, and 50 g of dimethoxymethane, 50 g of thionyl chloride, 8 g of tin tetrachloride, and 280 mL of nitrobenzene were used to carry out a reaction for 4.5 hours at 40°C, and thus 19 g of a chloromethylated polyethersulfone copolymer was synthesized by the same method as that used in Example 1. The subsequent processes were carried out by the same method as that used in Example 1, and thus 16 g of a sulfomethylated polyethersulfone polymer electrolyte (A-5) was obtained. The molecular weight was 83,100 as the number average molecular weight and was 217,000 as the weight average molecular

weight, which values were obtained by gel permeation chromatography and calculated relative to polystyrene standards.

Example 14

Production of sulfomethylated polyethersulfone polymer electrolyte membrane (A-5 membrane)

A sulfomethylated polyethersulfone polymer electrolyte membrane (A-5 membrane) was produced by forming a film of the sulfomethylated polyethersulfone polymer electrolyte (A-5) by the same method as that used in Example 2. This membrane was evaluated by various testing methods.

[Table]

| | |
|---|---|
| Ion exchange group equivalent weight | 441 g/mol |
| Proton conductance | 0.13 S/cm |
| Swellability (water) | 60% |
| Swellability (methanol) | 587% |
| Fenton's test | weight reduction ratio 34% |

Example 15

Synthesis of sulfomethylated polyethersulfone polymer electrolyte (A-6)

(In the formula (V), x = y = 1, R = x/y = 1)

100 g of the polyethersulfone copolymer obtained in Example 11 was used as a raw material, and 250 g of dimethoxymethane, 250 g of thionyl chloride, 82 g of tin tetrachloride, and 1400 mL of nitrobenzene were used to carry out a reaction for 10 hours at 40°C, and thus 92 g of a chloromethylated polyethersulfone copolymer was synthesized by the same method as that used in Example 1. In the subsequent processes, a part of the obtained resin was synthesized by the same method as that used in Example 1, and thus 10g of a sulfomethylated polyethersulfone polymer electrolyte (A-6) was obtained. The molecular weight was 83,100 as the number average molecular weight and was 217,000 as the weight average molecular weight, which values were obtained by gel permeation chromatography and calculated relative to polystyrene standards.

Example 16

Production of sulfomethylated polyethersulfone polymer electrolyte membrane (A-6 membrane)

A sulfomethylated polyethersulfone polymer electrolyte membrane (A-6 membrane) was produced by forming a film of the sulfomethylated polyethersulfone polymer electrolyte (A-6) by the same method as that used in Example 2. This membrane was evaluated by various testing methods.

[Table]

| | |
|---|---|
| Ion exchange group equivalent weight | 537 g/mol |
| Proton conductance | 0.10 S/cm |
| Swellability (water) | 52% |
| Swellability (methanol) | 156% |
| Fenton's test | weight reduction ratio 20% |

Example 17

Synthesis of sulfomethylated polyethersulfone polymer electrolyte (A-7)

(In the formula (V), x = y = 1, R = x/y = 1)

120 g of the polyethersulfone copolymer obtained in Example 11 was used as a raw material, and 300 g of

dimethoxymethane, 300 g of thionyl chloride, 18 g of tin tetrachloride, and 1140 mL of nitrobenzene were used to carry out a reaction for 7 hours at 40°C. A portion (250 mL) of the reaction liquid was collected, and 11.2 g of a chloromethylated polyethersulfone copolymer was synthesized therefrom by the same method as that used in Example 1. The subsequent processes were carried out by the same method as that used in Example 1, and thus 10 g of a sulfomethylated polyethersulfone polymer electrolyte (A-7) was obtained. The molecular weight was 131,000 as the number average molecular weight and was 506,000 as the weight average molecular weight, which values were obtained by gel permeation chromatography and calculated relative to polystyrene standards.

Example 18

Production of sulfomethylated polyethersulfone polymer electrolyte membrane (A-7 membrane)

A sulfomethylated polyethersulfone polymer electrolyte membrane (A-7 membrane) was produced by forming a film of the sulfomethylated polyethersulfone polymer electrolyte (A-7) by the same method as that used in Example 2. This membrane was evaluated by various testing methods.
[Table]

| | |
|---|---|
| Ion exchange group equivalent weight | 510 g/mol |
| Proton conductance | 0.12 S/cm |
| Swellability (water) | 52% |
| Swellability (methanol) | 341% |
| Fenton's test | weight reduction ratio 71 % |

Example 19

Synthesis of sulfomethylated polyethersulfone polymer electrolyte (B-3)

(In the formula (V), x = 2, y =1, R = x/y = 2)

20 g of the polyethersulfone copolymer synthesized in Example 3 was used as a raw material, and 50 g of dimethoxymethane, 50 g of thionyl chloride, 2.4 g of tin tetrachloride, and 200 mL of nitrobenzene were used to carry out a reaction for 8 hours at 40°C, and thus 21 g of a chloromethylated polyethersulfone copolymer was synthesized by the same method as that used in Example 1. The subsequent processes were carried out by the same method as that used in Example 1, and thus 15 g of a sulfomethylated polyethersulfone polymer electrolyte (B-3) was obtained. The molecular weight was 54,800 as the number average molecular weight and was 142,000 as the weight average molecular weight, which values were obtained by gel permeation chromatography and calculated relative to polystyrene standards.

Example 20

Production of sulfomethylated polyethersulfone polymer electrolyte membrane (B-3 membrane)

A sulfomethylated polyethersulfone polymer electrolyte membrane (B-3 membrane) was produced by forming a film of the sulfomethylated polyethersulfone polymer electrolyte (B-3) by the same method as that used in Example 2. This membrane was evaluated by various testing methods.
[Table]

| | |
|---|---|
| Ion exchange group equivalent weight | 592 g/mol |
| Proton conductance | 0.075 S/cm |
| Swellability (water) | 36% |
| Swellability (methanol) | 248% |
| Fenton's test | weight reduction ratio 29% |

Example 21

Synthesis of sulfomethylated polyethersulfone polymer electrolyte (C-1)

(In the formula (V), x =1, y = 2, R = x/y = 0.5)

In a 1-L three-necked flask equipped with a stirrer, a thermometer, a Dean-Stark tube and a reflux tube, 181 g (0.63 mol) of 4,4'-dichlorodiphenylsulfone, 37 g (0.2 mol) of 4,4'-biphenol (BP), 134 g (0.4 mol) of 2,2-bis(4-hydroxyphenyl)hexafluoropropane (BisAF), 99 g (0.72 mol) of potassium carbonate, 1000 mL of DMAc, and 150 mL of toluene were placed, and the mixture was stirred under reflux for 2 hours at 150°C in a nitrogen atmosphere. The water produced with the progress of reaction was removed from the system by azeotropically boiling with toluene. Thereafter, toluene was also distilled off, the reaction temperature was raised to 160°C, and the reaction liquid was continuously stirred under reflux for 24 hours. The reaction liquid thus obtained was filtered to remove inorganic salts produced therein, and the residue was reprecipitated with 5 L of methanol to thereby obtain a polymer. The polymer was filtered and dried, and thus 330 g of a polyethersulfone copolymer was obtained.

20 g of the polyethersulfone copolymer thus obtained was used as a raw material, and 50 g of dimethoxymethane, 50 g of thionyl chloride, 20 g of tin tetrachloride, and 250 mL of nitrobenzene were used to carry out a reaction for 9.5 hours at 40°C, and thus 18 g of a chloromethylated polyethersulfone copolymer was synthesized by the same method as that used in Example 1. The subsequent processes were carried out by the same method as that used in Example 1, and thus 9.5 g of a sulfomethylated polyethersulfone polymer electrolyte (C-1) was obtained. The molecular weight was 51,500 as the number average molecular weight and was 114,000 as the weight average molecular weight, which values were obtained by gel permeation chromatography and calculated relative to polystyrene standards.

Example 22

Production of sulfomethylated polyethersulfone polymer electrolyte membrane (C-1 membrane)

A sulfomethylated polyethersulfone polymer electrolyte membrane (C-1 membrane) was produced by forming a film of the sulfomethylated polyethersulfone polymer electrolyte (C-1) by the same method as that used in Example 2. This membrane was evaluated by various testing methods.

[Table]

| | |
|---|---|
| Ion exchange group equivalent weight | 661 g/mol |
| Proton conductance | 0.064 S/cm |
| Swellability (water) | 36% |
| Swellability (methanol) | 248% |
| Fenton's test | weight reduction ratio 75% |

Example 23

Synthesis of sulfomethylated polyethersulfone polymer electrolyte (C-2)

(In the formula (V), x =1, y =2, R = x/y =0.5)

20 g of the polyethersulfone copolymer synthesized in Example 19 was used as a raw material, and 50 g of dimethoxymethane, 50 g of thionyl chloride, 10g of tin tetrachloride, and 200 mL of nitrobenzene were used to carry out a reaction for 6.5 hours at 40°C, and thus 18 g of a chloromethylated polyethersulfone copolymer was synthesized by the same method as that used in Example 1. The subsequent processes were carried out by the same method as that used in Example 1, and thus 13 g of a sulfomethylated polyethersulfone polymer electrolyte (C-2) was obtained. The molecular weight was 49,600 as the number average molecular weight and was 110,000 as the weight average molecular weight, which values were obtained by gel permeation chromatography and calculated relative to polystyrene standards.

Example 24

Production of sulfomethylated polyethersulfone polymer electrolyte membrane (C-2 membrane)

A sulfomethylated polyethersulfone polymer electrolyte membrane (C-2 membrane) was produced by forming a film of the sulfomethylated polyethersulfone polymer electrolyte (C-2) by the same method as that used in Example 2. This membrane was evaluated by various testing methods.

[Table]

| | |
|---|---|
| Ion exchange group equivalent weight | 577 g/mol |
| Proton conductance | 0.088 S/cm |
| Swellability (water) | 44% |
| Swellability (methanol) | 508% |
| Fenton's test | weight reduction ratio 5% |

The respective evaluation results for the electrolyte membranes obtained in Examples 8, 10, 12, 14, 16, 18, 20, 22 and 24 and Comparative Examples 1, 2 and 3 are presented in the following Table 2.

Table 2

| | Proton conductance (S/cm) | Swellability (water) (area increase %) | Swellability (methanol) (area increase %) | Fenton's test (weight reduction %) |
|---|---|---|---|---|
| Example 8 | 0.068 | 36 | 97 | 20 |
| Example 10 | 0.078 | 40 | 180 | 9 |
| Example 12 | 0.059 | 28 | 60 | 23 |
| Example 14 | 0.13 | 60 | 587 | 34 |
| Example 16 | 0.10 | 52 | 156 | 20 |
| Example 18 | 0.12 | 52 | 341 | 71 |
| Example 20 | 0.075 | 36 | 248 | 29 |
| Example 22 | 0.064 | 36 | 248 | 75 |
| Example 24 | 0.088 | 44 | 508 | 5 |
| Comparative Example 1 | 0.069 | 69 | 304 | Dissolved after 60 minutes |
| Comparative Example 2 | 0.13 | 60 | Dissolved | Dissolved after 60 minutes |
| Comparative Example 3 | 0.15 | Dissolved | Dissolved | Dissolved after 30 minutes |

As it is obvious from the results of Table 2, since the electrolyte membranes obtained in Examples 8, 10, 12, 14, 16, 18, 20, 22 and 24 of the present invention have higher proton conductance than that in Comparative Examples 1, 2 and 3, the electrolyte membranes have excellent ion conductivity, and also have excellent swellability. Particularly, the electrolyte membranes were also found to show highly excellent results in the Fenton's test (oxidation resistance). Furthermore, the proton conductance is greater than the measured value of Nafion (0.078 S/cm), which is known as an electrolyte membrane for fuel cells, and thus the electrolyte membranes of the present invention are highly useful in terms of performance.

## Claims

1. A polyethersulfone polymer electrolyte, simultaneously having a structural unit represented by the following formula (I) and a structural unit represented by the following formula (II):

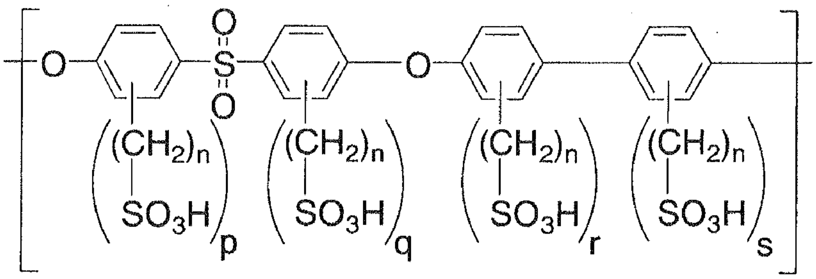

(I)

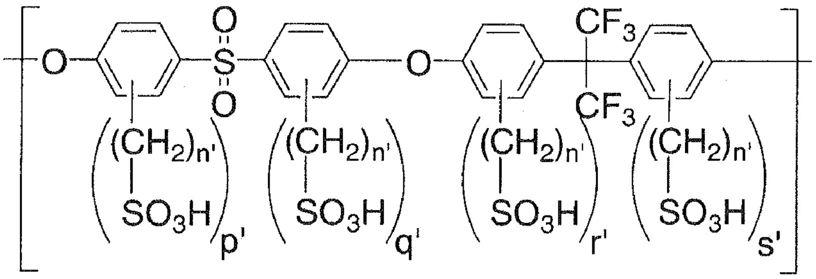

(II)

wherein in the above formula, n and n' each independently represent an integer from 1 to 6; and p, q, r, s, p', q', r' and s' each independently represent an integer from 0 to 4, and they do not all simultaneously represent zero.

**2.** The polyethersulfone polymer electrolyte according to claim 1, wherein the copolymerization ratio R of the structural unit represented by the formula (I) to the structural unit represented by the formula (II) is $0.1 < R < 10$.

**3.** The polyethersulfone polymer electrolyte according to claim 1 or 2, wherein all of n = all of n'=1.

**4.** The polyethersulfone polymer electrolyte according to any one of claims 1 to 3,
wherein the equivalent weight per mole of sulfonic acid groups is from 200 to 1000 g/mol.

**5.** A method for producing the polyethersulfone polymer electrolyte according to any one of claims 1 to 4, the method comprising subjecting a polyethersulfone copolymer having a structural unit represented by the following formula (III) and a structural unit represented by the following formula (IV), to halogenoalkylation, subsequently to acylthiolation, and then to oxidation:

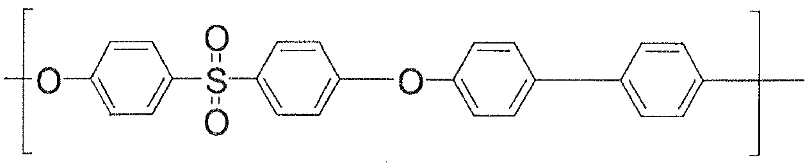

(III)

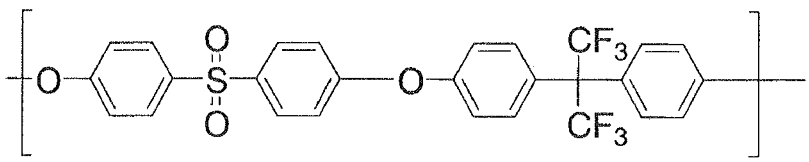

(IV)

**6.** A solid polymer electrolyte membrane, comprising the polyethersulfone polymer electrolyte according to any one

of claims 1 to 4.

**7.** A solid polymer electrolyte membrane, comprising a polyethersulfone polymer electrolyte that is obtained by introducing a sulfo-(C1-C6)alkyl group to the polyethersulfone copolymer having a structural unit represented by the formula (III) and a structural unit represented by the formula (IV) according to claim 5.

**8.** A solid polymer type fuel cell having the solid polymer electrolyte membrane according to claim 6 or 7.

**INTERNATIONAL SEARCH REPORT**

International application No.
PCT/JP2008/068033

A. CLASSIFICATION OF SUBJECT MATTER
*H01B1/06*(2006.01)i, *H01M8/02*(2006.01)i

According to International Patent Classification (IPC) or to both national classification and IPC

B. FIELDS SEARCHED

Minimum documentation searched (classification system followed by classification symbols)
H01B1/06, H01M8/02, C08G65/334

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2008-74946 A (Toyobo Co., Ltd.), 03 April, 2008 (03.04.08), Claims 1, 12; Par. Nos. [0025], [0027], [0030], [0034], [0037], [0050] to [0051], [0067] to [0070], [0091] (Family: none) | 1,2,4,6,8 |
| Y | JP 2006-32179 A (Honda Motor Co., Ltd.), 02 February, 2006 (02.02.06), Par. Nos. [0080], [0096], [0099], [0058] to [0059], [0159] to [0162] (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 December, 2008 (03.12.08) | 16 December, 2008 (16.12.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/068033

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-28414 A (JSR Corp.), 02 February, 2006 (02.02.06), Par. Nos. [0039], [0076] to [0078], [0094], [0097], [0132] to [0134] (Family: none) | 1-8 |
| Y | JP 2006-310158 A (Fuji Photo Film Co., Ltd.), 09 November, 2006 (09.11.06), Claim 1; Par. Nos. [0025] to [0032], [0036] to [0038], [0042] (Family: none) | 1-8 |
| E,X | JP 2008-291224 A (Nippon Kayaku Co., Ltd.), 04 December, 2008 (04.12.08), Claims (Family: none) | 1-8 |
| A | JP 2008-234844 A (Toyobo Co., Ltd.), 02 October, 2008 (02.10.08), Par. Nos. [0036] to [0038], [0045], [0048], [0055] (Family: none) | 1-4,6,8 |
| A | JP 2003-100317 A (Hitachi, Ltd.), 04 April, 2003 (04.04.03), Claims 3 to 5; Par. Nos. [0042] to [0044] & US 2003/0096149 A1 & US 2005/0031930 A1 & EP 1296398 A2 & CA 2394674 A1 | 1 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003031232 A
- JP 2005206807 A
- JP 3607862 B
- JP 3561250 B
- JP 10021943 A
- JP 2005126532 A